# NEW EUROPEAN PATENT SPECIFICATION

(11) **EP 1 966 065 B2**
(45) Date of publication and mention of the opposition decision: **28.11.2012**
(45) Mention of the grant of the patent: 09.12.2009
(21) Application number: 06842597.4
(22) Date of filing: 19.12.2006
(51) Int. Cl.: B65D 85/804, A47J 31/40

(54) **A CARTRIDGE FOR PREPARING BEVERAGES AND A BEVERAGE PREPARATION SYSTEM**
PATRONE ZUR HERSTELLUNG VON GETRÄNKEN UND GETRÄNKEHERSTELLUNGSSYSTEM
CARTOUCHE POUR PREPARER DES BOISSONS ET SYSTEME DE PREPARATION DE BOISSON

(30) Priority: 21.12.2005 EP 05112565
(43) Date of publication of application: 10.09.2008
(73) Proprietor: Koninklijke Philips Electronics N.V., 5621 BA Eindhoven (NL)
(72) Inventor: RIJSKAMP, Peter, NL-5656 AA Eindhoven (NL); HILLE, Rogier, NL-5656 AA Eindhoven (NL); ROZEBOOM, Frans, W., NL-5656 AA Eindhoven (NL); DE JONG, Olaf, M., NL-5656 AA Eindhoven (NL); HERREWIJNEN, Jeroen, NL-5656 AA Eindhoven (NL)
(74) Representative: Uittenbogaard, Frank
(86) International application number: PCT/IB2006/054938
(87) International publication number: WO 2007/072413

(56) References cited:
- EP-A1- 0 334 573
- EP-A1- 1 208 782
- EP-B1- 0 451 980
- WO-A-01/58786
- WO-A1-2005/063093
- JP-A- 61 172 167
- NL-A- 1 026 437
- US-A- 3 662 706
- US-A- 3 695 314
- US-A- 3 802 606
- US-A- 4 771 165
- US-A- 4 963 939
- US-A- 5 011 042
- US-A- 5 562 353
- US-A- 5 974 950
- US-A- 6 035 762
- US-A1- 2002 048 621
- '''Miniature snap-action switch''' WIKIPEDIA

## Description

The invention relates to a cartridge for preparing beverages, comprising a container for containing at least one beverage ingredient, wherein the cartridge is adapted to be inserted into a beverage preparation machine in an insertion direction and provided with a shape-encoded recognition code comprising at least two encoding positions, wherein the encoding positions are arranged along an encoding line.

The invention also relates to a beverage preparation machine comprising decoder means for decoding a shape-encoded recognition code off a cartridge for supplying ingredients for preparing beverages, wherein the recognition code comprises at least two encoding positions.

Moreover the invention relates to a beverage preparation system comprising a cartridge and a beverage preparation machine.

It is known to use cartridges filled with one or more ingredient, such as ground coffee optionally with powdered milk/sugar, tea, powdered chocolate, soup, when preparing beverages with a beverage preparation machine. The cartridges, which can be bought ready for use as pre-portioned packages, are intended to be inserted into a designated chamber of the beverage preparation machine. After instructing the beverage preparation machine to start the brewing process, the ingredients within the cartridge are brewed and/or mixed with hot water in order to prepare preferably hot beverages.

For example US 2003/0033938 A1 discloses a beverage preparation machine using cartridges in accordance with the pre-amble of claim 1 which are separated into two or more sections, one section containing ground coffee and another section containing powdered milk or creamer. The cartridges are provided with a plurality of upstanding pegs whereby the cartridge is identified by the beverage preparation machine for treatment and the identification of the cartridge thereby causes it to be subjected to the correct treatment steps including the introduction of the water into the cartridge and the activation of whipping means. These cartridges are also provided with teeth intended to enable the cartridge to be driven through the beverage preparation machine by the engagement of the teeth with a drive mechanism. The teeth and the recognition means are both provided along the conveying direction of the cartridge. In order to identify the type of cartridge in the vicinity of the brewing portion of the beverage preparation machine as the cartridge is conveyed within the beverage preparation machine, the pegs are sequentially passed by at a sensing arm which senses the presence or absence of the upstanding pegs. If one or more peg is not present the sensing arm will thereby identify the different type of cartridge. The sensing arm operates a switch in the beverage preparation machine which thereby transmits information concerning the presence or absence of the pegs on the cartridge to a control mechanism. The arrangement of the pegs on the cartridge thus identifies the type of cartridge to a controller which selects the appropriate beverage preparation conditions.

In this beverage preparation machine there is only one sensing arm sensing the presence or absence of each peg. The absence of pegs can only be sensed when the control means also considers the conveying speed of the cartridge and thus checks the presence or absence only at a certain point of time at which the "not present peg" is supposed to pass the sensing arm. Moreover, this sequential sensing by means of a single sensing arm makes it necessary to cache the presence or absence of all pegs until the last peg is sensed. This sensing method requires a complicated, and thus expensive, control or processing and is likely to cause incorrect decoding, since the presence or absence of the pegs can only be sensed within a small time slot which depends on the conveying speed of the cartridge.

It is therefore an object of the present invention to provide a cartridge for preparing beverages, a beverage preparation machine and a beverage preparation system having the ability to precise the recognition in a simpler and cheaper manner.

This object is solved by a cartridge for preparing beverages according to claim 1 and a beverage preparation system according to claim 5. Further advantageous developments are outlined in the dependent claims.

In accordance with the invention there is provided a cartridge according to claim 1. Due to the specific arrangement of the recognition code it is possible that the beverage preparation machine into which the cartridge is inserted senses all the encoding positions in parallel. Such a parallel decoding has the advantage that the code representing the type of cartridge can directly be read from decoder means without extensively processing the read-in signals in control means. This decoding does not require triggering the sensing of the individual encoding positions depending on the insertion speed of the cartridge. Thus, as soon as the cartridge has reached its designated position the type of cartridge is present without using complex processing algorithms. Furthermore, this specific arrangement of the recognition code is the optimum alignment in order to ensure that all encoding positions can be sensed in parallel and substantially simultaneously.

The advantage of providing a connector in addition to the container is that the container can be produced independently of the connector owing to the different requirements for both of them. The connector is required to withstand the forces applied thereto when inserting and mounting the cartridge into the beverage preparation machine. In contrast thereto, usually no forces are applied to the container, but the container shall keep the ingredients fresh. Thus, a more rigid material might be chosen when producing the connector, whereas a rather thinwalled material might be sufficient for the production of the container. Moreover, this has the advantage that different connectors might be used for the same type of cartridge, e.g. cartridges filled with the same ingredient are provided with different connectors initiating different brewing processes. Also, the different connectors may initiate different decalcification modes.

Due to the mixing and/or brewing within the connector it is not necessary that the container withstands the hot water and/or steam used when brewing the beverages. Thus, it is not required to produce the container out of heat-resistant material.

Moreover it is preferred for the cartridge that the connector has at least one inlet for receiving fluid, at least one inlet for receiving the ingredients from the container and at least one outlet for discharging the mixture or extract resulting from the mixing and/or brewing of the ingredients with the fluid. Such an arrangement provides the advantage, that the connector can be connected with the container in a detachable manner, because the connector comprises all the necessary connections for mixing and/or brewing the beverage.

Furthermore it is preferred for the cartridge that each encoding position is intended to either comprise a cam or not. Cams have the advantage of an easy production and they can be formed strong enough to avoid deformation when a mechanical decoding is performed.

Further it is favorable for the cartridge that the connector is of an elongated flat shape, wherein the encoding positions are provided at a longitudinal end of the connector. Due to the flat shape of the connector the cartridge can be small sized and still rigid enough to ensure a reliable encoding, since it is possible to produce the connector out of a rigid material.

The beverage preparation machine of the beverage preparation system according to claim 5 comprises decoder means for decoding a shape-encoded recognition code of a cartridge for supplying ingredients for preparing beverages, wherein the recognition code comprises at least two encoding positions, wherein the decoder means are adapted to decode the at least two encoding positions in parallel. Such a parallel decoding has the advantage that the code representing the type of cartridge can directly be read from decoder means without extensively processing the read-in signals in a control means. This decoding does not require triggering the sensing of the individual encoding positions depending on the insertion speed of the cartridge. Thus, as soon as the cartridge reached its designated position the type of cartridge is present without using complex processing algorithms.

These and other aspects of the invention will be apparent from and elucidated with reference to the embodiment described herein after.
Fig. 1 illustrates schematically a beverage preparation machine.
Fig. 2 shows a cartridge for preparing beverages according to the present invention.
Fig. 3 illustrates a connector of the cartridge according to the present invention.
Fig. 4 shows decoder means according to the present invention.
Figs. 5 and 6 show the decoder means being provided in the form of a module.
Fig. 7 shows alternative decoder means according to the present invention.
Fig. 8 shows a further alternative decoder means according to the present invention.
Fig. 9 shows a yet further alternative decoder means according to the present invention.

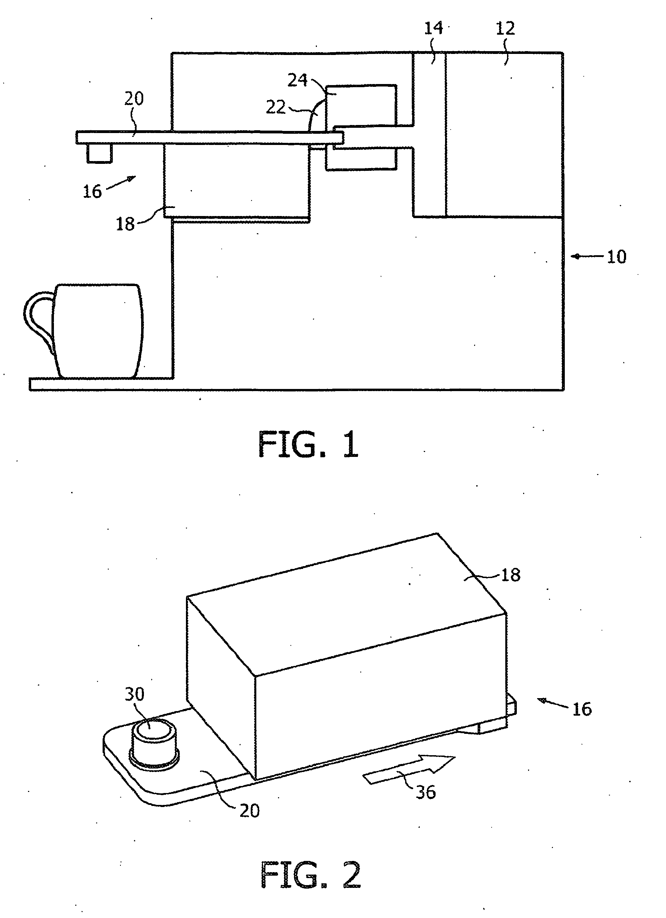

Figure 1 illustrates schematically a beverage preparation machine 10. This beverage preparation machine comprises a water container 12 for storing water and a fluid feeding unit 14 for generating steam and supplying water and/or steam to a cartridge 16, wherein the water is preferably hot water heated by the fluid feeding unit 14. The cartridge 16 is comprised of two parts, a container 18 that contains the ingredient, and a connector 20 that forms the connection between the beverage preparation machine 10 and the container 18. Further the connector 20 of the cartridge 16 is provided with a later described shape-encoded recognition code 32, which comes upon insertion of the cartridge 16 into contact with levers 22 of a decoding means 24 for recognizing the inserted type of cartridge 16.

Figure 2 shows the cartridge 16 for preparing beverages according to the present invention. The container 18 can be filled with one or more ingredients for preparing beverages, in particular hot beverages. These ingredients might for example be ground coffee optionally with powdered milk/sugar, tea, powdered chocolate, soup, and so on, or liquid extracts of afore mentioned ingredients. The container should be of an air- and waterproof material, such as aluminum foil, that prevents the ingredients from coming in contact with air and/or humidity before the ingredients are actually used within the beverage preparation machine 10. The connection between the container 18 and the connector 20 can either be detachable or non-detachable using for example some kind of gluing, pressing or snapping connection. When being inserted into a beverage preparation machine 10 the connector 20 provides the connection between the beverage preparation machine 10 and the container 18 and should therefore be of a material being more rigid than the material necessary for the container 18.

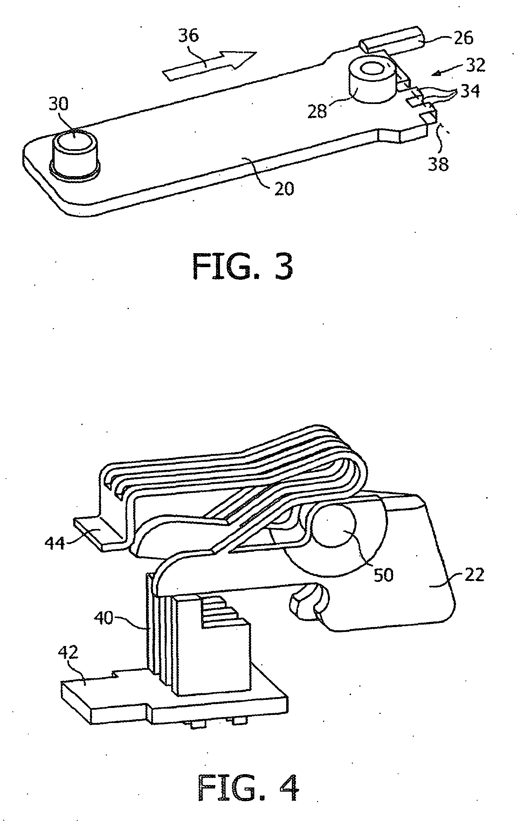

Figure 3 illustrates the connector of the cartridge 16 according to the present invention. The connector 20 is a flat elongated part having a fluid inlet 26 for feeding fluid, such as water and/or steam, wherein the water is preferably hot water. Moreover, the connector 20 comprises an ingredient inlet 28 forming a communication passage with the container 18 for supplying the ingredients within the container 18 into the connector 20 where these ingredients are mixed and/or brewed with the fluid introduced through the fluid inlet 26. In this context the ingredients might for example be sucked into the connector 20 by a suction effect caused in the connector 20 by means of specific flow characteristics of the fluid within the connector 20, or the ingredients within the container 18 might be introduced through the ingredient inlet 28 by means of an air pressure supplied via a separate port to the container 18. After the ingredients are mixed and/or brewed with the fluid within the connector 20, the thus extracted beverage is discharged through the outlet 30 and preferably pouring directly into a cup or glass. On a leading end which is intended to be introduced first when inserting the cartridge 16 into a beverage preparation machine 10, the connector 20 is provided with the shape-encoded recognition code 32 composed of at least two encoding positions 34. In the preferred embodiment this recognition code 32 is provided in the form of cams, wherein the respective encoding positions 34 can represent information by the presence or absence of a cam. In the present embodiment it is preferred to provide three encoding positions 34, which can represent by the presence or absence of a cam at each encoding position 34, 2³ = 8 different settings to be detected. Alternatively to cams there might be used for example knobs or another geometric unevenness. It is only important that the recognition code 32 is shape-encoded, that is, each encoding position 34 represents different information by a varied physical geometry at this position. This recognition code 32 is recognized by the beverage preparation machine 10 upon insertion of the cartridge 16 in the beverage preparation machine 10. In detail, the encoding positions 34 are positioned such that they are displaced from each other in a direction perpendicular to the insertion direction 36 of the cartridge 16 into the beverage preparation machine 10. Due to this distancing it is possible to decode the encoding positions 34 in parallel leading to the advantages described above. This distancing is accomplished by arranging the encoding positions 34 along an encoding line 38, which is nonparallel to the insertion direction 36 of the cartridge 16. When positioning the encoding positions 34 nonparallel to the insertion direction 36, all positions can be accessed in parallel by a later described decoder means. The information contained by the recognition code 32 is used by the beverage preparation machine 10 to select from its memory the desired mode in order to be able to prepare a particular beverage. The variables per mode might be the amount of water, the amount of steam and the sequence of water and steam. Moreover, the beverage preparation machine 10 can also be put by the recognition code 32 into a special mode, such as a decalcification mode. The presence or absence of the respective cams is detected by decoder means provided in the beverage preparation machine 10.

Figure 4 shows decoder means 24 which comprise three levers 22, wherein their number is equal to the number of encoding positions 34 provided on the connector 20 of the above described cartridge 16. The levers 22 are supported on a common axis 50. Further, the levers 22 are relatively small dimensioned in a direction along the axis 50 and comparably large dimensioned in a direction perpendicular to the axis 50. Within the plain perpendicular to the axis 50, the levers are elongated, wherein on one side in the longitudinal direction relative to the portion supported by the axis 50, the levers are substantially square-shape (as seen along the axis 50). On the other side in the longitudinal direction relative to the portion supported by the axis 50, the levers are narrower in a transverse direction of the longitudinal levers 22 and are substantially rectangular (as seen along the axis 50). Thus, the levers 22 are heavier on the square-shaped side than on the rectangular side, but the lever arm of force is larger on the rectangular side. At one end of the levers 22, in the present embodiment the rectangular ends, there are provided push-button switches 40, equal in amount to the encoding positions 34 and levers 22, arranged such that their push-buttons can be actuated by the rotation of the levers 22. These push-button switches 40 are attached to a printed circuit board 42 properly aligned with the levers 22. In order to bias the levers 22 the decoder means 24 comprises a spring 44, as biasing means, for biasing the levers 22.

In operation when no cartridge 16 is present the switches are normally closed by the levers, that is, the levers 22 are biased such that they push the push-buttons of the push-button switches 40. The actuation of a lever 22 by the presence of a cam at the encoding position 34 to which this lever is assigned, results in a lifting off of the lever 22 from the push-button of the push-button switch 40, such that the push-button switch 40 is opened, that is, it conducts electric current.

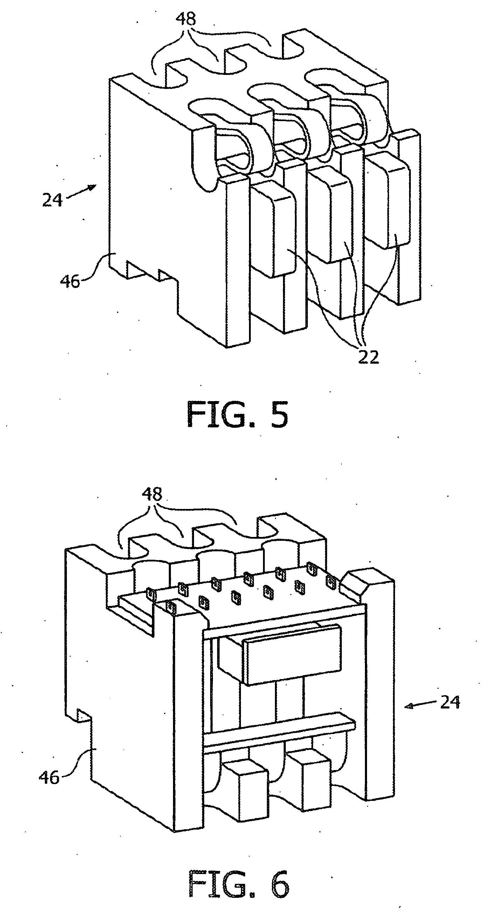

Figures 5 and 6 show the decoder means 24 being provided in the form of a module. All parts of the decoder means 24, including the levers 22, the push-button switches 40, the printed circuit board 42 and the spring 44 are mounted into a housing 46. All parts can be pre-assembled into this housing 46 making it a single part which can be used in a detachable manner in the beverage preparation machine 10, in other words, the thus achieved module can be mounted elsewhere, making it a sub-assembly. The housing 46 is provided with pollution channels 48 extending along the direction of gravity when the beverage preparation machine 10 is placed ready for use. Thus, the pollution channels 48 transport the pollution, such as dust or liquid, to a place where it is not harmful, which is a bottom plate of the beverage preparation machine 10. Moreover, the housing prevents that pollution can reach the printed circuit board 42 or the push-button switches 40 since the housing wall blocks its way.

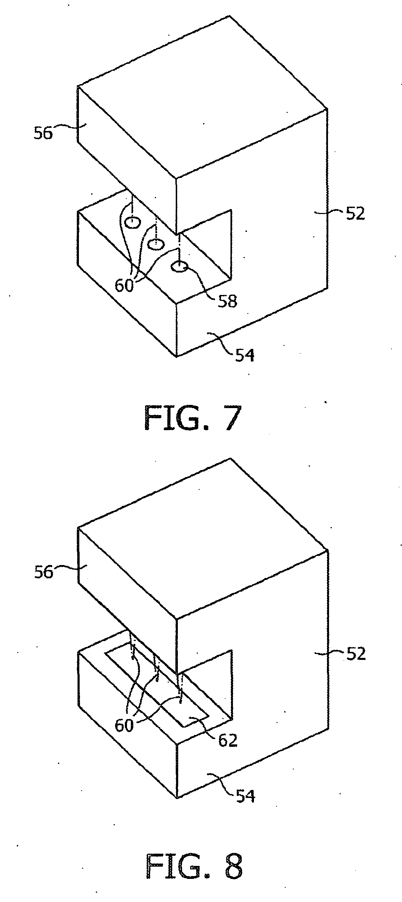

Figure 7 shows alternative decoder means 52 which can be used instead of the above described mechanical decoder means 24 and can be installed in the beverage preparation machine 10 identically to the above described decoder means 24. The decoder means 52 are provided as a module as described in connection with Figure 4 and 5 having the same overall outer dimensions. Two projections 54 and 56 project from the main body of the decoder means 52, such that a space is formed between the two projections 54 and 56. On an inner side of the projection 54, which faces the projection 56, three light receivers 58 are integrated. Opposite thereto, three light emitters are integrated into the projection 56, which are able to emit light beams 60 toward the light receivers 58. The light receivers 58 are adapted to receive the light emitted by the light emitters such that it can be determined whether the light beam is interrupted by an object inserted into the space between the projections 54 and 56. Having the three light emitters and the three light receivers 58 the decoder means 52 provides three reading sections each comprising one of the three light receivers 58 and the corresponding one of the light emitters opposite thereto. Each of these reading sections is assigned to one of the encoding positions 34. If the cartridge 16 is inserted into the beverage preparation machine 10, the encoding positions 34 are positioned relative to the light beams 60 such that light beams 60 intersect the encoding line 38. In the case that the shape encoding is realized by cams as described above, the presence of a cam at a encoding position interrupts the respective light beam 60 and the absence of a cam at another encoding position does not interrupt the respective one of the light beams 60 such that the light beam 60 can be received by the light receiver 58. Instead of cams, the encoding positions 34 can also be adapted to provide a slot or not. In that case, the absence of a slot will block the light from the light emitter and the presence of a slot will enable the light beam 60 to reach the light receiver and the reading section will be activated. Also, even if the preferred number of reading sections is three, another number of reading sections can be provided.

Figure 8 shows a further alternative decoder means. In difference to the decoder means 52 described in Figure 7, the electronic decoder means 52 can be modified such that light receivers are not accommodated in the projection 54, but accommodated in the projection 56 adjacent to the light emitters. On the inners side of the projection 54, a reflection surface 62 is formed. If a cam is absent (or a slot is present) the light beam 60 is emitted from the respective light emitter, reflected by the reflection surface 62 and received by the respective light receiver. Since the light emitters are arranged adjacent to their respective light receivers, the light beams 60 are emitted towards the reflection surface 62 under a certain angle being determined such that without an interruption of the light beams 60 the light beams 60 are reflected to the positions where the respective light receivers are positioned.

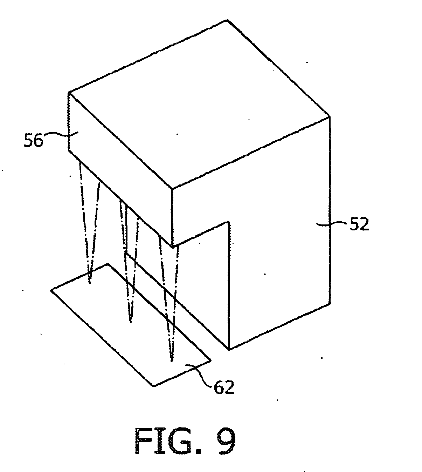

Figure 9 shows a yet further alternative decoder means. In difference to the decoder means 52 shown in Figure 8, the projection 54 of the decoder means 52 is omitted and the reflection surface 62 is arranged somewhere in the housing of the beverage preparation machine 10. The functionality of the decoder means 52 according to Figure 9 is the same as described with reference to Figure 8.

The above described invention thus provides a cartridge 16 for preparing beverages and a beverage preparation system providing the advantage that a decoding is enabled that has the advantage that the code representing the type of cartridge 16 can directly be read from decoder means 24 without extensively processing the read-in signals in a control means. This decoding does not require triggering the sensing of the individual encoding positions 34 depending on the insertion speed of the cartridge 16. Thus, as soon as the cartridge 16 reached its designated position the type of cartridge 16 is present without using complex processing algorithms.

Equivalents and modifications not described above may also be employed without departing from the scope of the invention as defined in the accompanying claims. Some modification might be mentioned in the following.

Alternatively, to the above described embodiment the connector 20 can comprise more than one fluid inlet and more than one outlet. Thereby, for example one fluid inlet can be used to introduce water and the other fluid inlet can be used to introduce steam.

In the above embodiment the cams contain information by their presence or absence, which leaves two encoding possibilities per encoding position 34. However, alternatively there can be more possible encoding possibilities per encoding position 34 by also considering the height of the cams (their dimension in the insertion direction 36 of the cartridge 16). For example, this way the decoder can sense the absence of a cam, the presence of a full-height cam or the presence of a half-height cam, which would provide 3³ = 27 different settings with 3 encoding positions 34.

In the preferred embodiment push-button switches can be used, however, other switches, such as lever switches, can also be used.

Moreover, in the above embodiment the push-button switches are of a type, which is opened (conducts electric current) when the push-button is pushed and closed (cuts off electric current) when the push-button is not pushed. As a matter of course, the push-buttons can also be of a type which functions vise versa, such that the push-button switch is closed when the push-button is opened.

Alternatively, to a light sensor, other non-contact sensors like a magnetic sensor or a capacitive sensor may be used in the decoder means 52. In the case of a magnetic sensor, the encoding positions 34 would have to be provided with magnets.

In the accompanying claims reference numerals are provided exclusively for an easier understanding of the claims. It is not intended in any way that these reference numerals shall limit the scope of the invention.

## Claims

1. A cartridge (16) for preparing beverages, comprising a container (18) for containing at least one beverage ingredient, and a connector (20) being connected with the container (18), which is adapted for mixing and/or brewing the at least one ingredient supplied from the container (18) with fluid, wherein the cartridge (16) is adapted to be inserted into a beverage preparation machine (10) in an insertion direction (36), wherein the cartridge is provided with a shape-encoded recognition code (32) comprising at least two encoding positions (34), wherein the encoding positions (34) are arranged along a straight encoding line (38), **characterized in that** the insertion direction (36) and the encoding line (38) are nonparallel and the encoding line (38) is perpendicular to the insertion direction (36), and wherein the connector (20) is provided with the recognition code (32) at a leading end with respect to the insertion direction (36), which is adapted to be introduced first when the cartridge (16) is installed into a beverage preparation machine (10).

2. The cartridge (16) according to claim 1, wherein the connector (20) has at least one inlet (26) for receiving fluid, at least one inlet (28) for receiving the ingredients from the container (18) and at least one outlet (30) for discharging the mixture or extract resulting from the mixing and/or brewing of the ingredients with the fluid.

3. The cartridge (16) according to claim 1, wherein each encoding position (34) is intended to either comprise a cam or not.

4. The cartridge (16) according to claim 3, wherein the connector is of an elongated flat shape, wherein the encoding positions (34) are provided at a longitudinal end of the connector.

5. A beverage preparation system comprising a cartridge (16) according to claim 1 and a beverage preparation machine (10) comprising decoder means (24, 52) for decoding the shape-encoded recognition code (32) of the cartridge (16), wherein the decoder means are adapted to decode the at least two encoding positions (34) of the recognition code (32) of the cartridge (16) in parallel.

## Patentansprüche

1. Kartusche (16) zum Zubereiten von Getränken, mit einem Behälter (18) zum Fassen von mindestens einer Getränkezutat sowie einem mit dem Behälter (18) verbundenen Verbindungsstück (20), das zum Mischen und/oder Aufbrühen der mindestens einen aus dem Behälter (18) zugeführten Zutat mit Flüssigkeit ausgebildet ist, wobei die Kartusche (16) so ausgebildet ist, dass sie in einer Einführungsrichtung (36) in eine Getränkezubereitungsmaschine (10) eingebracht wird, **dadurch gekennzeichnet, dass** die Kartusche mit einem formcodierten Erkennungscode (32) mit mindestens zwei Codierpositionen (34) versehen ist, wobei die Codierpositionen (34) entlang einer geraden Codierlinie (38) angeordnet sind, wobei die Einführungsrichtung (36) und die Codierlinie (38) nicht parallel sind und die Codierlinie (38) senkrecht zu der Einführungsrichtung (36) verläuft, und wobei das Verbindungsstück (20) gegenüber der Einführungsrichtung (36) an einem Vorderende mit dem Erkennungscode (32) versehen ist, welches so ausgebildet ist, dass es erst eingeführt wird, wenn die Kartusche (16) in eine Getränkezubereitungsmaschine (10) eingesetzt ist.

2. Kartusche (16) nach Anspruch 1, wobei das Verbindungsstück (20) mindestens einen Einlass (26) zur Aufnahme von Flüssigkeit, mindestens einen Einlass (28) zur Aufnahme der Zutaten aus dem Behälter (18) und mindestens einen Auslass (30) zur Abgabe der Mischung oder des sich aus dem Mischen und/oder Aufbrühen der Zutaten mit der Flüssigkeit ergebenden Extraktes aufweist.

3. Kartusche (16) nach Anspruch 1, wobei jede Codierposition (34) entweder einen Nocken umfassen soll oder nicht.

4. Kartusche (16) nach Anspruch 3, wobei das Verbindungsstück eine längliche, flache Form aufweist, wobei die Codierpositionen (34) an einem longitudinalen Ende des Verbindungsstücks vorgesehen sind.

5. Getränkezubereitungssystem mit einer Kartusche (16) nach Anspruch 1 sowie einer Getränkezubereitungsmaschine (10) mit Decodiermitteln (24, 52) zum Decodieren eines formcodierten Erkennungscodes (32) der Kartusche (16), wobei die Decodiermittel so eingerichtet sind, dass sie die mindestens zwei Codierpositionen (34) des Erkennungscodes (32) der Kartusche (16) parallel decodieren.

## Revendications

1. Cartouche (16) pour la préparation de boissons, comprenant un récipient (18) pour contenir au moins un ingrédient de boisson, et un connecteur (20) connecté au récipient (18), qui est adapté de manière à mélanger et/ou à infuser l'au moins un ingrédient fourni à partir du récipient (18) avec le fluide, dans lequel la cartouche (16) est adaptée de manière à être insérée dans une machine de préparation de boissons (10) dans une direction d'insertion (36), **caractérisée en ce que** la cartouche est pourvue d'un code de reconnaissance à codage de forme (32) comprenant au moins deux positions de codage (34) dans laquelle les positions de codage (34) sont agencées le long d'une ligne droite de codage (38), dans laquelle la direction d'insertion (36) et la ligne de codage (38) sont non parallèles et **en ce que** la ligne de codage (38) est perpendiculaire à la direction d'insertion (36), et dans laquelle le connecteur (20) est pourvue du code de reconnaissance (32) à une extrémité d'entrée par rapport à la direction d'insertion (36), qui est adaptée à être introduite en première instance lorsque la cartouche (16) est installée dans une machine de préparation de boissons (10).

2. Cartouche (16) selon la revendication 1, dans laquelle le connecteur (20) présente au moins une entrée (26) pour recevoir le fluide, au moins une entrée (28) pour recevoir les ingrédients en provenance du récipient (18) et au moins une sortie pour décharger le mélange ou l'extrait qui résulte du mélange et/ou de l'infusion des ingrédients avec le fluide.

3. Cartouche (16) selon la revendication 1, dans laquelle chaque position de codage (34) est destinée à comprendre soit une came, soit pas de came.

4. Cartouche (16) selon la revendication 3, dans laquelle le connecteur est d'une forme plate allongée où les positions de codage (34) sont prévues à une extrémité longitudinale du connecteur.

5. Système de préparation de boissons comprenant une cartouche (16) selon la revendication 1 et une machine de préparation de boissons (10) comprenant des moyens de décodage (24, 52) pour décoder un code de reconnaissance à codage de forme (32) de la cartouche (16) dans lequel les moyens de décodage sont adaptés de manière à décoder les au moins deux positions de codage (34) du code de reconnaissance (32) de la cartouche (16) en parallèle.
